**Europäisches Patentamt**

**European Patent Office**

**Office européen des brevets**

(19)

(11) Veröffentlichungsnummer: **0 013 440**
**B2**

(12) # NEUE EUROPÄISCHE PATENTSCHRIFT

(45) Veröffentlichungstag der neuen Patentschrift:
08.05.85

(51) Int. Cl.⁴: **C 08 J 3/02, C 09 D 3/72**

(21) Anmeldenummer: 79105416.6

(22) Anmeldetag: 31.12.79

(54) Verwendung von wasserlöslichen Elektrolyten als Zusatzmittel in wässrigen Polyurethandispersionen und eine, einen wasserlöslichen Elektrolyten enthaltende, wässrige Polyurethandispersion.

(30) Priorität: 09.01.79 DE 2900574

(43) Veröffentlichungstag der Anmeldung:
23.07.80 Patentblatt 80/15

(45) Bekanntmachung des Hinweises auf die Patenterteilung:
22.12.82 Patentblatt 82/51

(45) Bekanntmachung des Hinweises auf die Entscheidung
über den Einspruch:
08.05.85 Patentblatt 85/19

(84) Benannte Vertragsstaaten:
AT BE DE FR GB IT NL SE

(56) Entgegenhaltungen:
DE - A - 2 328 057
DE - A - 2 531 895
DE - A - 2 551 094
DE - A - 2 659 617
DE - B - 2 424 331
GB - A - 1 204 818
US - A - 2 754 280

Die Angewandte Makromolekulare Chemie 26 (1972) S.
85-106 (Nr. 419)
Chemie, Physik und Technologie der Kunststoffe in
Einzeldarstellungen, 14, Herausgeber K.A. Wolf,
Springer Verlag (1969) Dispersionen synthetischer
Hochpolymerer, Teil II, Anwendung von Hans Reinhard,
Seite 160

(73) Patentinhaber: BAYER AG, Konzernverwaltung RP
Patentabteilung, D-5090 Leverkusen 1 Bayerwerk (DE)

(72) Erfinder: Wenzel, Wolfgang, Dr., Peter
Landwehr-Strasse 13, D-5060 Berg.-Gladbach (DE)
Erfinder: Meckel, Walter, Dr., Zonser Strasse 9,
D-4040 Neuss (DE)

## Beschreibung

Die vorliegende Erfindung betrifft die Verwendung von wasserlöslichen Elektrolyten zur Verbesserung der Eigenschaften von wäßrigen Polyurethandispersionen bzw. zur Verbesserung der aus den Polyurethandispersionen erhältlichen Flächengebilde, sowie eine bevorzugte, wasserlöslichen Elektrolyt enthaltende Dispersion.

Die Herstellung von wäßrigen, stabilen, d. h. nichtsedimentierenden Kunststoffdispersionen, insbesondere Polyurethandispersionen ist seit langem bekannt (vgl. hierzu beispielsweise US-PS 3 479 310, GB-PS 1 076 688, US-PS 3 756 992, US-PS 4 094 842, US-PS 4 108 814, DE-OS 2 035 732, DE-OS 2 659 617, DE-OS 2 708 442, US-PS 3 905 929, US-PS 3 920 598, DE-OS 2 555 534 oder »Die Angewandte Makromolekulare Chemie«, 26, 85—106 (1972), Angewandte Chemie, 82, 53—63 (1970)). In einigen Literaturstellen findet sich auch der Hinweis, daß den Polyurethandispersionen Metallionen zugesetzt werden können. So beschreibt beispielsweise die GB-PS 1 076 688 unter anderem den Zusatz von Oxiden, Hydroxyden oder Carbonaten zwei- und mehrwertiger Metalle zu Dispersionen, die freie Säuregruppen enthalten müssen, da andernfalls diese schwer wasserlöslichen Verbindungen nicht mit der Polyurethanmatrix reagieren können. Andererseits beschreibt die DE-OS 2 659 617 den Zusatz von 0,5 bis 100 Gew.-%, bezogen auf Feststoff an Elektrolyten zu wäßrigen ionischen Polyurethandispersionen, wobei die Polyurethanionomeren 1,2—50 Gew.-%, bezogen auf Polyurethan-Feststoff, an Äthylenoxideinheiten aufweisen müssen, um ein Koagulieren zu verhindern. Die Aufgabe der dieser Veröffentlichung zugrundeliegenden Erfindung war es, die Koagulationstemperatur von wäßrigen Polyurethan-(Harnstoff-)Dispersionen durch Elektrolytzusatz einstellen zu können.

Die Aufgabe der vorliegenden Erfindung war es demgegenüber, wäßrige Polyurethandispersionen so zu modifizieren, daß mit ihnen hergestellte Fächengebilde eine verbesserte Wasserresistenz und/oder Blockfestigkeit aufweisen.

Diese Aufgabe konnte erfindungsgemäß überraschenderweise dadurch gelöste werden, daß den nachstehend näher beschriebenen Polyurethandispersionen bestimmte Mengen an nachstehend näher beschriebenen Elektrolyten einverleibt werden. Hierbei war des weiteren überraschend, daß auch wäßrige Dispersionen von anionisch hydrophil modifizierten Polyurethanen durch die erfindungsgemäße Modifizierung bezüglich ihrer Lagerbeständigkeit nicht nachteilhaft beeinträchtigt werden.

Gegenstand der vorliegenden Erfindung ist die Verwendung von wasserlöslichen organischen oder anorganischen Salzen als Zusatzmittel für wäßrige Dispersionen von selbstdispergierbaren anionisch und/oder nichtionisch-hydrophil modifizierten Polyurethanen, dadurch gekennzeichnet, daß man zur Verbesserung der Wasserresistenz und/oder Blockfestigkeit der aus den Dispersionen hergestellten Flächengebilde den Dispersionen im Falle von maximal 1,0 Gew.-% an eingebauten nichtionisch-hydrophilen Gruppen aufweisenden Polyurethanen 0,01 bis 3,0 Gew.-%, bezogen auf Feststoff, und im Falle von mehr als 1,0 Gew.-% an eingebauten nichtionisch-hydrophilen Gruppen aufweisenden Polyurethanen 0,01 bis 0,4 Gew.-%, bezogen auf Feststoff, der Salze zusetzt.

Gegenstand der vorliegenden Erfindung ist auch die bevorzugte, durch die erfindungsgemäße Verwendung zugängliche, einen Feststoffgehalt von 5 bis 65 Gew.-% aufweisende wäßrige Dispersionen eines eingebaute anionische Gruppen aufweisenden Polyurethans mit einem Gehalt an eingebauten anionischen Gruppen von 1 bis 50 Milliäquivalenten pro 100 g und einem Gehalt von innerhalb von Polyätherketten eingebauten Äthylenoxideinheiten von maximal 1,0 Gew.-%, gekennzeichnet durch einen Gehalt von 0,01 bis 3,0 Gew.-%, bezogen auf Feststoff, an wasserlöslichem Elektrolyt.

Für die erfindungsgemäße Modifizierung sind mit Ausnahme der elektrolytempfindlichen kationisch hydrophil modifizierten, selbstdispergierbaren Polyurethane, alle beliebigen wäßrigen Dispersionen von selbstdispergierbaren Polyurethanen geeignet.

Bei diesen erfindungsgemäß geeigneten Polyurethandispersionen handelt es sich um Dispersionen selbstdispergierbarer Polyurethane, wobei die Selbstdispergierbarkeit sowohl durch ionische Gruppen, insbesondere Carboxylat- oder Sulfonatgruppen, als auch durch nichtionischhydrophile Gruppen, beispielsweise Äthylenoxidgruppen, bewirkt sein kann.

Geeignete wäßrige Polyurethandispersionen sind insbesondere wäßrige Dispersionen von selbstdispergierbaren, anionisch modifizierten Polyurethanen, die einen Gehalt an innerhalb von Polyätherketten eingebauten Äthylenoxideinheiten, d. h. von nichtionisch-hydrophilen Gruppen von maximal 1 Gew.-%, bezogen auf Feststoff, aufweisen. Diese besonders bevorzugten Dispersionen weisen im allgemeinen einen Gehalt an 1 bis 50, vorzugsweise 5 bis 30, Milliäquivalenten pro 100 g Feststoff an anionischen Gruppen, d. h. insbesondere Carboxylatgruppen $-COO^-$ oder Sulfonatgruppen $SO_3^-$ auf. Auch Dispersionen mit einem Gehalt an innerhalb von Polyätherketten eingebauten Äthylenoxideinheiten von mehr als 1,0 Gew.-% sind der erfindungsgemäßen Modifizierung zugänglich, wobei hier jedoch weniger eine Verbesserung der Wasserresistenz als vielmehr eine Verbesserung der Blockfestigkeit der aus den Dispersionen hergestellten Beschichtungen eine Folge der erfindungsgemäßen Maßnahme ist.

Geeignete Polyurethandispersionen sind alle beliebigen, obigen Kriterien entsprechenden Dispersionen des Standes der Technik, wie er beispielsweise aus den eingangs genannten Literaturstellen ersichtlich ist.

Die erfindungsgemäß zu modifizierenden Dispesionen weisen im allgemeinen einen Gehalt an Feststoff von 5 bis 65, vorzugsweise 20 bis 50 Gew.-% auf.

Gemische der beispielhaft genannten Dispersionen können selbstverständlich ebenfalls erfindungsgemäß modifiziert werden.

Als Elektrolyte werden bei der erfindungsgemäßen Verwendung wasserlösliche organische oder anorganische Salze eingesetzt. Als Kation sind alle Metallkationen und organische bzw. anorganische Verbindungen mit geeignet. Bevorzugt sind doppelt positiv geladene Metallionen und hiervon sind besonders bevorzugt die Kationen der Erdalkalimetalle.

Als Säurekomponente der Salze sind alle organischen und anorganischen Säuren geeignet, soweit sie zu wasserlöslichen Salzen führen. Bevorzugt werden die Mineralsäuren wie z. B. Schwefelsäure, Salpetersäure, Phosphorsäure und Salzsäure eingesetzt.

Als Beispiele bevorzugter Salze, die teilweise hydratisiert sind, sind folgende genannt: Calciumchlorid, Calciumnitrat, Magnesiumacetat, Magnesiumchlorid, Magnesiumnitrat, Kupferformiat, Manganacetat, Manganchlorid, Bariumchlorid, Cadmiumsulfat.

Die Elektrolyte werden bei der erfindungsgemäßen Verwendung in einer Menge von 0,01 bis 3,0, vorzugsweise 0,05 bis 0,5 Gew.-%, bezogen auf dispergierten Feststoff, eingesetzt, mit der Einschränkung, daß im Falle der erfindungsgemäßen Modifizierung von Dispersionen von Polyurethanen mit mehr als 1,0 Gew.-% innerhalb von Polyätherketten eingebauten Äthylenoxideinheiten, die Elektrolyte lediglich in einer Menge von 0,01 bis 0,4, vorzugsweise 0,05 bis 0,4 Gew.-%, bezogen auf Feststoff, zum Einsatz gelangen. Der Elektrolytzusatz zu den Dispersionen bewirkt, insbesondere im Falle der Dispersionen von anionisch modifizierten, selbstdispergierbaren Polyurethanen, eine starke Verbesserung der Wasserresistenz und Blockfestigkeit der aus den Dispersionen herstellbaren Flächengebilde. Im Falle der Modifizierung von Dispersionen von nichtionisch-hydrophil modifizierten Polyurethanen ist die Verbesserung der Wasserresistenz nur von vergleichsweise untergeordneter Bedeutung, jedoch tritt auch hier durch die erfindungsgemäße Maßnahme eine ganz wesentliche Verbesserung der Blockfestigkeit der aus den Dispersionen hergestellten Flächengebilde ein.

Bei der erfindungsgemäßen Verwendung wird die erfindungsgemäß zu modifizierende Polyurethan-Dispersion vorzugsweise in einem mit einem Rührer oder einem sonstigen Mischaggregat versehenen Reaktionsgefäß vorgelegt und die Elektrolyt-Lösung bei einer Temperatur zwischen 5 und 95°C, vorzugsweise zwischen 15 und 35°C, unter intensivem Durchmischen eingetragen.

Die Elektrolyt-Lösung enthält vorzugsweise Salz und Wasser in einem Gewichtsverhältnis von 1 : 1 bis 1 : 200, besonders bevorzugt von 1 : 5 bis 1 : 30.

Die Menge des zugesetzten Salzes ist abhängig von der zu modifizierenden Dispersion. Maximal sollte im Falle der anionischen Dispersionen nur soviel Elektrolyt zugegeben werden, daß folgende Gleichung erfüllt ist:

$\Sigma$ Mol (potentielle) Anionen der Dispersion $\geq \Sigma$ Val Kation des zugesetzten Elektrolyts.

Eine Herstellung der Elektrolyte in situ durch getrennte Zugabe einer wäßrigen Lauge und anschließend der entsprechenden Säure zu der wäßrigen Dispersion ist im Prinzip möglich, jedoch nicht bevorzugt.

Selbstverständlich können die erfindungsgemäß modifizierten Polyurethan-Dispersionen auch mit anderen Polymerdispersionen abgemischt werden, sofern die Dispersionen miteinander verträglich sind.

Die erfindungsgemäße Verwendung gestattet, wie bereits ausgeführt, die Herstellung von Polyurethan-Dispersionen, die zu Filmen führen, die sich durch hohe Wasserfestigkeit und/oder Blockfestigkeit auszeichnen.

Die erfindungsgemäß modifizierten Dispersionen können grundsätzlich für die gleichen Anwendungsgebiete verwendet werden, wie die nichtmodifizierten Ausgangsdispersionen, beispielsweise für flexible, homogene oder geschäumte oder mikroporöse Beschichtungen für Papier, Textilien, Natur- und Syntheseleder oder als Klebstoff oder Imprägniermittel, aber auch als weniger oder nichtflexible Überzüge, wie Lacke, für Holz, Metalle oder Kunststoffe, oder als Schlichte für Glasfasern oder Pigmentumhüllung. Die Applikation erfolgt stets aus wäßriger Phase und richtet sich in ihre Technik nach den Anwendungsgebieten. So kann man beispielsweise rakeln, streichen, spritzen, bürsten oder drucken, wobei nach der Applikation für ein Entfernen des Wassers zu sorgen ist.

In den nachfolgenden Beispielen beziehen sich, soweit nicht anderslautend vermerkt, alle Prozentangaben auf Gewichtsprozente.

Beispiel 1

| | |
|---|---|
| 300 g | Butandiolphthalat (OHZ 56) (PE) |
| 60 g | Isophorondiisocyanat (IPDI) |
| 570 g | Aceton |
| 20 g | äthylendiaminoäthansulfonsaures Natrium (45%ig in Wasser) (AAS) |
| 545 g | entsalztes Wasser |
| 3 ml | Calciumnitrat-(Lösung) (1 N in Wasser) |

Durchführung

Der Polyester (PE) wird 30 Minuten bei 120°C unter Rühren im Vakuum entwässert. Anschließend wird der Ester auf 80°C abgekühlt und das Diisocyanat zugegeben. Man rührt die Schmelze bei 80—90°C so lange, bis ein NCO-Gehalt von 2,7% gefunden wird. Dann wird langsam das Aceton zugegeben, wobei die Temperatur auf ca. 45°C sinkt. Wenn eine klare Lösung vorliegt, wird die AAS-Lösung verdünnt mit 60 g Wasser zugegeben und 5 Minuten verrührt. Anschließend wird mit dem restlichen Wasser dispergiert und dann das Aceton im Wasserstrahlvakuum abgezogen. Die so erhaltene Dispersion wird nachstehend als Dispersion (a) bezeichnet. In 380 g der so erhaltenen Dispersion wird die Calciumnitrat-Lösung gegeben. Man erhält so die erfindungsgemäß modifizierte Dispersion (b). Beide Dispersionen (a) und (b) weisen einen Feststoffgehalt von 40,5%, eine Fordbecherauslaufzeit (4 mm Düse) von 15 Sekunden und einen pH-Wert von 6,8 auf.

Von der Ausgangsdispersion (a) und der modifizierten Dispersion (b) werden jeweils ein Film auf einer Glasplatte gezogen und 30 Minuten bei 120°C getrocknet.

Folgende Naßreibungen nach Satra (siehe Tabelle 1) wurden gefunden:

a) 506
b) 1411

## Beispiel 2

| | |
|---|---|
| 100,0 g | Adipinsäure-Phthalsäure-Äthylengly-kol-Polyester (OHZ 56) |
| 300,0 g | Phthalsäure-Butandiol-Polyester (OHZ 56) |
| 79,0 g | Isophorondiisocyanat |
| 850 g | Aceton |
| 39,0 g | äthylendiaminoäthansulfonsaures Natrium (45%ig in Wasser) |
| 720 g | entsalztes Wasser |

### Durchführung: vgl. Beispiel 1

Man erhält eine sedimentationsstabile Dispersion (a), die bei einem Feststoff von 41,2%, eine Fordbecherauslaufzeit (4 mm Düse) von 19 Sekunden und einen pH-Wert von 6,6 hat.

Zu je 25 g dieser Dispersion (a) werden (b) 0,1 ml, (c) 0,2 ml, (d) 0,3 ml, (e) 0,4 ml und (f) 0,5 ml einer 1 N Calciumnitrat-Lösung unter intensivem Rühren (sonst Koagulation) gegeben. Von den Dispersionen (a) bis (f) werden jeweils zwei Filme auf Glasplatten gezogen und 30 Minuten bei 120°C getrocknet. Die Filmwerte sind in Tabelle 1 zusammengefaßt.

Schon die Dispersion b zeigt gegenüber der Dispersion a eine wesentlich verbesserte Block-festigkeit als Papierbeschichtungsmittel.

Tabelle 1

| Dispersion | ml 1 N Ca(NO$_3$)$_2$ pro 25 g Dispersion | Naßreibung[1] nach Satra |
|---|---|---|
| a | — | 1552 |
| a$_1$ | — | 1575 |
| b | 0,1 | 1661 |
| b$_1$ | 0,1 | 1622 |
| c | 0,2 | 1824 |
| c$_1$ | 0,2 | 1856 |
| d | 0,3 | 3566 |
| d$_1$ | 0,3 | 3646 |
| e | 0,4 | 4580 |
| e$_1$ | 0,4 | 4560 |
| f | 0,5 | 5129 |

[1] Die Naßreibungen wurden mit einer Satra Finish Rub Fastness Tester STM 102 unter einer Belastung von 2,5 kg und bei ca. 150 U/Min. mit einem nassen Filz auf Glasplatten aufgezogenen Filmen durchgeführt.

## Beipiel 3

| | |
|---|---|
| 250,0 g | eines auf Bisphenol-A gestarteten Poly-propylenglykol-Polyäthers (OH-Zahl 197) |
| 117,9 g | Hexamethylendiisocyanat |
| 475,0 g | Aceton |
| 30,8 g | äthylen-diamino-2-äthansulfonsaures Natrium (45%ig in Wasser) |
| 6,7 g | Äthylendiamin |
| 560,0 g | entsalztes Wasser |

### Durchführung

Der Polyäther wird bei 110°C 30 Minuten im Vakuum unter Rühren entwässert und auf 80°C abgekühlt. Es wird das Diisocyanat zugegeben und solange bei 80°C verrührt, bis ein NCO-Gehalt von 5,4% (ca. 6 Stunden) gefunden wird. Das Aceton wird eingerührt. Wenn eine homogene Lösung vorliegt, wird bei 60°C ein Gemisch aus den beiden Aminen und 20 ml Wasser fünf Minuten lang eingerührt. Danach wird mit dem Rest des Wassers dispergiert und anschließend das Aceton abdestilliert.

Man erhält eine feinteilige Dispersion, die im durchscheinenden Licht einen Tyndall-Effekt aufweist. Der pH-Wert beträgt 6. Die Fordbecher-Viskosität (4 mm Düse) beträgt bei einem Feststoffgehalt von 41% 120 Sekunden. Die Naßreibungen der Filme sind in Abhängigkeit vom Elektrolytgehalt in Tabelle 2 zusammengefaßt.

Tabelle 2

| Dis-persion g | Elektrolyt Art | 1 N-Lösung ml | Naß-reibungen nach Satra |
|---|---|---|---|
| 25 | — | — | 370 |
| 25 | Cu(II)formiat | 0,1 | 520 |
| 25 | Cu(II)formiat | 0,1 | 596 |
| 25 | Cu(II)formiat | 0,2 | 693 |
| 25 | Cu(II)formiat | 0,2 | 732 |
| 25 | Cu(II)formiat | 0,3 | 946 |
| 25 | Cu(II)formiat | 0,3 | 933 |
| 25 | Cu(II)formiat | 0,4 | 766 |
| 25 | Cu(II)formiat | 0,4 | 717 |

**Patentansprüche**

1. Verwendung von wasserlöslichen organischen oder anorganischen Salzen als Zusatzmittel für wäßrige Dispersionen von selbstdispergierbaren anionisch und/oder nichtionisch-hydrophil modifizierten Polyurethanen, dadurch gekennzeichnet, daß man zur Verbesserung der Wasserresistenz und/oder Blockfestigkeit der aus den Dispersionen hergestellten Flächengebilde den Dispersionen im Falle von maximal 1,0 Gew.-% an eingebauten nichtionisch-hydrophilen Gruppen aufweisenden Polyurethanen 0,01 bis 3,0 Gew.-%, bezogen auf Feststoff, und im Falle von mehr als 1,0 Gew.-% an eingebauten nichtionisch-hydrophilen Gruppen aufweisenden Polyurethanen 0,01 bis 0,4 Gew.-%, bezogen auf Feststoff, der Salze zusetzt.

2. Einen Feststoff von 5 bis 65 Gew.-% aufweisende wäßrige Dispersion eines eingebaute anionische Gruppen aufweisenden Polyurethans mit einem Gehalt an eingebauten anionischen Gruppen von 1 bis 50 Milliäquivalenten pro 100 g und einem Gehalt von innerhalb von Polyätherketten eingebauten Äthylenoxideinheiten von maximal 1,0 Gew.-%, gekennzeichnet durch einen Gehalt von 0,01 bis 3,0 Gew.-%, bezogen auf Feststoff, an wasserlöslichem Elektrolyt.

**Claims**

1. Use of water-soluble organic or inorganic salts as additives for aqueous dispersions of self-dispersible anionically and/or non-ionically hydrophilically modified polyurethanes, characterised in that to improve the water resistance and/or blocking resistance of the sheet products produced from the dispersions 0.01 to 3.0% by weight, based on the solids content, of the salts are added to the dispersions in the case of polyurethanes containing not more than 1.0% by weight of chemically fixed non-ionic hydrophilic groups and 0.01 to 0.4% by weight, based on the solids content, of the salts are added to the dispersions in the case of polyurethanes containing more than 1.0% by weight of chemically fixed non-ionic hydrophilic groups.

2. Aqueous dispersions of a polyurethane having chemically fixed anionic groups, which dispersion has a solids content of 5 to 65% by weight and contains 1 to 50 milliequivalents of chemically fixed anionic groups per 100 g and not more than 1.0% by weight of ethylene oxide units chemically fixed within polyether chains, characterised by a content of 0.01 to 3.0% by weight, based on the solids content, of water soluble electrolyte.

**Revendications**

1. Utilisation de sels organiques ou inorganiques hydrosolubles comme additifs pour dispersions aqueuses de polyuréthannes autodispersibles à modification anionique et/ou non ionique-hydrophile, caractérisée en ce que, pour améliorer la résistance à l'eau et/ou la résistance à l'adhérence par contact des corps plans produits à partir des dispersions, on ajoute aux dispersions, dans le cas de polyuréthannes présentant au maximum 1,0% en poids de groupes non ioniques-hydrophiles incorporés, 0,01 à 3,0% en poids sur la base de la matière solide et, dans le cas de polyuréthannes présentant plus de 1,0% en poids de groupes non ioniques-hydrophiles incorporés, 0,01 à 0,4% en poids, par rapport à la matière solide, des sels.

2. Dispersion aqueuse, présentant une teneur en matière solide de 5 à 65% en poids, d'un polyuréthanne portant des groupes anioniques incorporés ayant une teneur en groupes anioniques incorporés de 1 à 50 milli-équivalents par 100 g et une teneur en motifs oxyde d'éthylène incorporés à l'intérieur de chaînes polyéther de 1,0% en poids au maximum, caractérisée par une teneur en électrolyte hydrosoluble de 0,01 à 3,0% en poids par rapport à la matière solide.